# FASCICULE DE BREVET EUROPEEN

(11) **EP 0 858 193 B1**
(45) Date de publication et mention de la délivrance du brevet: **20.10.2004**
(21) Numéro de dépôt: 98400215.4
(22) Date de dépôt: 03.02.1998
(51) Int. Cl.: H04L 12/56, H04Q 11/04

(54) **Procédé et dispositif d'allocation de ressources dans un réseau numerique de transmission par paquets**
Verfahren und Anlage für die Zuweisung von Betriebsmitteln in einem numerischen Paketübertragungsnetzwerk
Method and device for resource allocation in a digital packet transmission network

(30) Priorité: 07.02.1997 FR 9701433
(43) Date de publication de la demande: 12.08.1998
(73) Titulaire: FRANCE TELECOM, 75015 Paris (FR)
(72) Inventeur: Monin, Wei, 22300 Lannion (FR)
(74) Mandataire: Fréchède, Michel

(56) Documents cités:
- EP-A- 0 275 678
- US-A- 5 528 591
- OZVEREN C ET AL: "RELIABLE AND EFFICIENT HOP-BY-HOP FLOW CONTROL" COMPUTER COMMUNICATIONS REVIEW, vol. 24, no. 4, 1 octobre 1994, pages 89-100, XP000477043

## Description

La présente invention concerne un procédé d'allocation de ressources dans un réseau numérique de transmission par paquets.

Dans les réseaux de transmission de données, en mode paquet, qui présentent un débit élevé, de l'ordre de 34 Mbit/s à 622 Mbit/s à titre d'exemple, le comportement des sources est généralement très irrégulier.

De plus, au cours de la traversée d'un réseau, un ensemble de données peut passer par des liens de transmission supportant des débits très différents.

Même lorsque les capacités des divers liens de transmission sont identiques, plusieurs flux de données provenant de noeuds différents peuvent se présenter simultanément à une entrée particulière d'un noeud, créant un "goulot d'étranglement" susceptible de provoquer un état de congestion dans le réseau.

On cherche à la fois à utiliser au mieux la bande passante disponible, en autorisant les sources à émettre dès que cela est possible et à empêcher les congestions conduisant à des pertes de données, en ralentissant les sources le cas échéant : c'est ce qu'on appelle le contrôle de flux.

On connaît déjà des méthodes de contrôle de flux, parmi lesquelles on distingue deux familles principales : le contrôle de flux fondé sur l'allocation de crédits et le contrôle de flux fondé sur l'allocation de débits ; l'invention se situe dans la première famille.

Le principe du contrôle de flux fondé sur l'allocation de crédits est le suivant : on interdit à un émetteur de transmettre des données tant qu'il n'a pas reçu du récepteur l'indication que le récepteur est susceptible de les accueillir. Pour cela, le récepteur envoie régulièrement à l'émetteur des paquets de crédits contenant des informations sur sa capacité à recevoir des données.

Le nombre de "crédits" transportés par chaque paquet de crédits envoyé par le récepteur à l'émetteur correspond, pour chaque canal virtuel d'entrée de l'émetteur, au nombre de places inoccupées dans un registre tampon d'entrée affecté à ce canal virtuel. Divers algorithmes de gestion des crédits ont été proposés. On pourra par exemple se reporter à l'article de H.T. Kung et al., "Credit-based flow control for ATM networks : credit update protocol, adaptive credit allocation and statistical multiplexing", ACM 1994. Un autre exemple peut être trouvé dans l'article "Reliable and Efficient Hop-by-Hop Flow Control", C. Özveren et al, Computer Communication Review 24 (1994) No. 4, New York.

Un inconvénient de ce procédé est dû au temps requis pour la remontée de l'information de contrôle jusqu'à l'émetteur. La réaction de l'émetteur à une demande du récepteur est donc retardée, ce qui peut entraîner une sous-utilisation des ressources, d'autant plus importante que la distance entre le noeud émetteur et le noeud récepteur est grande. Si par exemple cette distance est de 500 km, le temps de propagation Rtt est de 5 ms. Le noeud amont ou émetteur ne réagit donc à un envoi de crédits que 5 ms après l'instant de disponibilité. Ce retard Rtt correspond à la durée d'émission de 1768 paquets de 53 octets à 150 Mbit/s. Sauf si on utilise des tampons d'entrée extrêmement longs sur le noeud récepteur, cette méthode d'allocation de crédits se traduit par une sous-utilisation du lien de transmission entre les noeuds émetteur et récepteur.

Dans le présent document, on considère, sauf avis contraire, que "transmettre un paquet" signifie envoyer ce paquet et l'effacer du tampon qui stocke ce paquet. Si ce n'est pas le cas, on mentionnera explicitement que l'émetteur "conserve" ledit paquet.

La présente invention a pour objectif de fournir un procédé de contrôle de flux à allocation de crédits permettant d'écarter les limitations liées au temps de propagation Rtt.

Afin d'atteindre cet objectif, la présente invention propose un procédé d'allocation de ressources dans un réseau numérique de transmission de données par paquets, entre un noeud émetteur de données et un noeud adjacent récepteur de données qui réémet vers l'aval, suivant lequel :
(a) le noeud récepteur envoie au noeud émetteur des paquets de crédits contenant des informations sur la capacité du noeud récepteur à recevoir des paquets de données en provenance dudit noeud émetteur ;
(b) l'émetteur envoie les paquets de données qu'il a à transmettre tant qu'il dispose de suffisamment de crédits ;
   caractérisé en ce que :
(c) lorsque ses crédits sont épuisés, le noeud émetteur continue à envoyer par anticipation les paquets de données en attente qu'il a à transmettre et conserve chaque paquet de données émis par anticipation jusqu'à ce que sa réception soit confirmée par l'arrivée de paquets spécifiques en provenance du récepteur ;
(d) le récepteur envoie vers l'émetteur une information indiquant les paquets de données perdus ;
(e) l'émetteur retransmet les paquets de données dont le récepteur a signalé la perte et détruit les paquets de données émis par anticipation et précédant les paquets de données perdus.

Dans un mode particulier de réalisation, les paquets de données émis portent un numéro de séquence et les paquets de crédits contiennent le numéro de séquence du paquet de données le plus élevé que le récepteur est prêt à recevoir.

Si l'émetteur possède plusieurs files d'attente respectivement associées à plusieurs canaux de propagation du réseau, les paquets de données étant émis dans l'ordre de leur numéro de séquence, l'émetteur transmet d'abord des paquets de données provenant de celles des files pour lesquelles le numéro de séquence contenu dans le dernier paquet de crédits reçu en provenance du récepteur est strictement supérieur au numéro du dernier paquet de données envoyé, et l'émetteur transmet ensuite, par anticipation, des paquets de données provenant de celles des files pour lesquelles l'émission par anticipation est autorisée (voir plus bas), pour lesquelles le numéro de séquence contenu dans le dernier paquet de crédits reçu en provenance du récepteur est inférieur ou égal au numéro du dernier paquet de données envoyé et pour lesquelles la différence entre les deux numéros de séquence est la plus petite, l'émetteur conservant les paquets de données transmis par anticipation.

Si le récepteur possède plusieurs files d'attente associées à plusieurs canaux de propagation du réseau, lors de l'arrivée d'un paquet de données de numéro de séquence m qui ne peut être admis chez le récepteur, faute de place dans la file d'attente correspondante, alors que le paquet de données précédent pour cette file a été admis, le récepteur envoie à l'émetteur un paquet de détection de rejet comportant le numéro de séquence m et rejette systématiquement tous les paquets de données suivants, jusqu'à l'arrivée, par retransmission, d'un nouvel exemplaire du paquet de données de numéro de séquence m.

Lorsque l'émetteur reçoit un paquet de crédits, respectivement un paquet de détection de rejet, en provenance du récepteur, il détruit tous les paquets de données, nécessairement émis par anticipation, dont le numéro de séquence est inférieur ou égal, respectivement inférieur, au numéro de séquence indiqué dans le paquet de crédits, respectivement dans le paquet de détection de rejet.

Lorsque l'émetteur reçoit un paquet de détection de rejet en provenance du récepteur, il inhibe l'émission par anticipation de paquets de données pour le canal de propagation concerné, jusqu'à l'arrivée d'un paquet de crédits comportant un numéro de séquence supérieur ou égal au numéro de séquence du premier paquet de données en attente à réémettre ou à transmettre prochainement sur ce canal de propagation.

Toutes ces opérations peuvent être commandées par programmation d'un processeur ou contrôleur ou effectuées par une logique câblée.

Dans un mode particulier de réalisation, le récepteur envoie un paquet de crédits vers l'émetteur dès que l'un ou l'autre des événements suivants se produit : (i) le nombre de paquets de données partis vers l'aval depuis l'émission du dernier paquet de crédits vers l'émetteur est égal à un nombre prédéterminé ; (ii) une durée prédéterminée de non-émission de paquets de crédits s'est écoulée depuis l'émission du dernier paquet de crédits vers l'émetteur. Dans le cas (ii), le nombre de crédits envoyés par le récepteur à l'émetteur peut être nul.

A titre d'exemple non limitatif, la durée de non-émission peut être choisie égale à la moitié du temps de propagation aller-retour d'un paquet de données entre les noeuds émetteur et récepteur.

La présente invention propose également un dispositif d'allocation de ressources dans un réseau numérique de transmission de données par paquets, comprenant :
un noeud récepteur de données comportant
   - un nombre prédéterminé n de tampons d'entrée, respectivement associés à n canaux virtuels qui correspondent à plusieurs sources d'émission de données dans le réseau,
   - des moyens connectés à chacun des tampons d'entrée, pour surveiller le niveau de remplissage de ces tampons , et
   - des moyens d'émission, connectés aux moyens de surveillance, pour constituer des paquets de crédits et des paquets de détection de rejet contenant des informations sur la capacité du noeud récepteur à recevoir des paquets de données ;
un noeud émetteur de données comportant
   - n tampons d'entrée respectivement associés aux n canaux virtuels,
   - des moyens de mémoire pour stocker les valeurs des crédits qui sont remises à jour lors de la réception d'un paquet de crédits en provenance du récepteur et lors de l'émission d'un paquet de données vers le récepteur,
   - des moyens de gestion, connectés aux moyens de mémoire, comportant des moyens de multiplexage de sortie et une pluralité de registres respectivement associés aux n canaux virtuels, chaque registre contenant le numéro de séquence du prochain paquet de données à transmettre sur le canal virtuel respectif, les moyens de gestion étant programmés pour commander la transmission, éventuellement par anticipation, des paquets de données vers le récepteur en fonction des valeurs de crédits, pour commander, lorsqu'un paquet de détection de rejet est reçu en provenance du noeud récepteur, la suppression, dans le tampon d'entrée du canal virtuel concerné, des paquets de données dont le numéro de séquence est inférieur au numéro indiqué dans le paquet de détection de rejet et l'interdiction de la transmission par anticipation sur ce canal virtuel, et pour commander, lorsqu'un paquet de crédits est reçu, la suppression, dans le tampon du canal virtuel concerné, des paquets de données, nécessairement émis par anticipation, dont le numéro de séquence est inférieur ou égal au numéro indiqué dans le paquet de crédits et la réactivation éventuelle de l'émission par anticipation si celle-ci était interdite ; et
un lien de transmission reliant le noeud émetteur au noeud récepteur, sur lequel sont émis, d'une part, des paquets de données du noeud émetteur vers le noeud récepteur, et d'autre part, des paquets de crédits et des paquets de détection de rejet du noeud récepteur vers le noeud émetteur.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :
- la figure 1 représente de façon schématique un couple noeud émetteur - noeud récepteur avec émission de paquets de crédits et de détection de rejet par le récepteur et émission de paquets de données par l'émetteur ;
- la figure 2 est un schéma de principe de la constitution d'un émetteur et d'un récepteur ;
- les figures 3 et 4 représentent des courbes comparant le débit relatif de sortie obtenu avec le procédé et le dispositif de la présente invention au débit relatif de sortie obtenu avec le procédé antérieur décrit par H.T. Kung dans l'article précité.

Pour simplifier, on considère dans toute la suite, au sein d'un réseau numérique de transmission de données par paquets, uniquement deux noeuds adjacents, dont l'un se comporte comme un émetteur de données et l'autre, comme un récepteur.

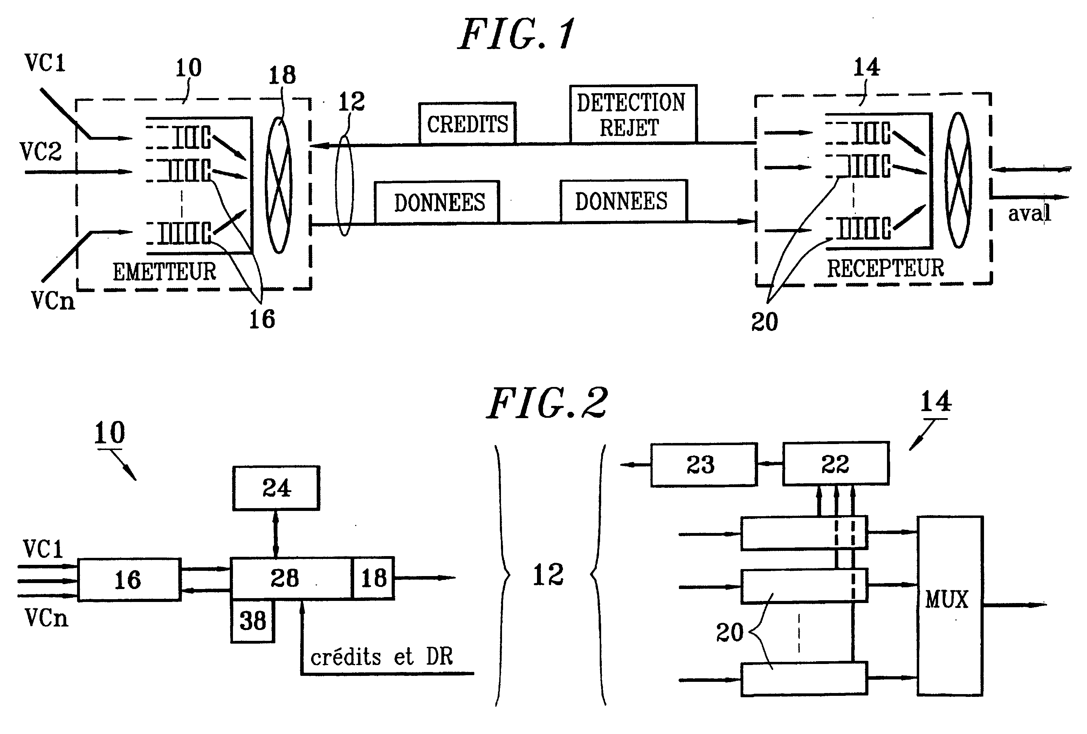

On supposera que le noeud émetteur 10, qu'on désignera par le terme "émetteur" pour simplifier, est alimenté par plusieurs sources (figure 1) et doit transmettre des données sous forme de paquets provenant de ces diverses sources sur un lien 12 à un récepteur 14 en tenant compte de la capacité du récepteur à recevoir ces données. Le lien 12 doit ainsi supporter plusieurs canaux virtuels VC1, VC2, ..., VCn correspondant aux diverses sources. L'émetteur 10 comporte des tampons d'entrée 16 dans lesquels s'accumulent les paquets de données provenant des sources. Un multiplexeur de sortie 18 de l'émetteur permet de transférer les paquets de données sur le lien 12. Le récepteur 14 comporte de son côté un tampon d'entrée 20 par canal virtuel. Suivant l'adresse portée par les paquets de données reçus sur le lien 12, le récepteur les oriente vers l'un ou l'autre des tampons d'entrée 20.

Les paquets de données, constitués par des ensembles de données sous forme numérique, peuvent avoir une taille fixe en octets, ce qui facilite la détermination des crédits, ou une taille variable. Il sera ici question uniquement de paquets de longueur fixe.

Un paquet de données qui arrive à l'émetteur en provenance d'une source ou d'un noeud de transmission situé en amont est mémorisé dans la file d'attente correspondante de l'émetteur si celui-ci ne l'envoie pas immédiatement vers l'aval. A l'intérieur d'un canal virtuel, les paquets de données portent un numéro de séquence et sont transmis par l'émetteur dans l'ordre de leur numéro de séquence.

Le récepteur 14 comporte des moyens 22 (figure 2) destinés à surveiller le niveau de remplissage des tampons 20 et un émetteur 23 destiné à constituer des paquets "crédit" et des paquets DR de détection de rejet et à les envoyer vers l'émetteur 10 sur le lien 12. Chaque paquet crédit contient, pour chaque canal virtuel, l'identification du nombre de paquets qu'il peut accepter, par exemple en donnant le numéro le plus élevé du paquet qu'il est prêt à recevoir sur ce canal virtuel. Dans la pratique, les tampons 20 peuvent constituer un seul composant, dont les places sont partagées entre les canaux virtuels, soit de façon statique (c'est-à-dire fixée une fois pour toutes), soit de façon dynamique.

Dans un réseau de type connu utilisant l'approche à allocation de crédits, l'émetteur est autorisé à émettre des paquets de données correspondant à un canal virtuel déterminé lorsqu'il n'a pas épuisé le nombre de crédits qu'il a reçus du récepteur. Pour cela, l'émetteur comporte une mémoire dans laquelle sont chargés les crédits provenant du récepteur et qui est décrémentée au fur et à mesure de l'émission de paquets. Ainsi, le récepteur est à coup sûr apte à faire suivre, à des usagers locaux ou sur des sorties en aval, les paquets de données qui arrivent.

Conformément à l'invention, l'émetteur est constitué de façon à pouvoir envoyer des paquets de données concernant un canal virtuel déterminé alors qu'il a épuisé les crédits correspondant à ce canal virtuel, mais uniquement dans certains cas, comme on le verra plus loin.

Les paquets émis par anticipation arrivant au récepteur risquent d'être rejetés si le récepteur ne dispose plus de places libres dans le tampon d'entrée. Pour remédier à ce risque, l'émetteur conserve chaque paquet de données émis par anticipation.

Pour simplifier, la figure 2 montre un seul tampon d'entrée 16, avec affectation statique des places disponibles aux différents canaux virtuels. Les crédits sont stockés dans une mémoire 24 et les disponibilités sont indiquées en permanence à un organe de gestion 28 comportant le multiplexeur 18. L'organe de gestion 28 comporte également un registre 38 pour chaque canal virtuel, qui contient le numéro de séquence du prochain paquet de données à transmettre sur ce canal virtuel. L'organe de gestion 28 peut notamment être programmé pour provoquer le fonctionnement suivant :
- après émission d'un paquet de données, le registre 38 correspondant contient le numéro de séquence suivant pour ce canal virtuel ;
- lorsqu'un paquet DR de détection de rejet est reçu, le numéro de séquence contenu dans ce paquet est écrit dans le registre 38 correspondant et les paquets de données, nécessairement émis par anticipation, dont le numéro de séquence est inférieur au numéro indiqué dans le paquet DR sont retirés du tampon 16 ; l'émission par anticipation sur ce canal virtuel est alors interdite ;
- lorsqu'un paquet de crédits est reçu, les paquets de données, nécessairement émis par anticipation, dont le numéro de séquence est inférieur au numéro indiqué dans le paquet de crédits sont retirés du tampon 16. Si l'émission par anticipation était interdite et si le numéro de séquence contenu dans le paquet de crédits reçu est supérieur ou égal à celui du premier paquet de données à émettre, indiqué dans le registre 38 correspondant, alors l'émission par anticipation sur ce canal virtuel est à nouveau autorisée ;
- tant que l'émetteur possède des files d'attente non vides, il transmet des paquets de données de ces files, en servant en priorité celles de ses files pour lesquelles le numéro de séquence contenu dans le dernier paquet de crédits reçu en provenance du récepteur est strictement supérieur au numéro de séquence du dernier paquet de données envoyé. Ces paquets de données sont aussitôt effacés du tampon 16 ;
- l'émetteur sert ensuite par anticipation celles de ses files pour lesquelles l'émission par anticipation est autorisée, pour lesquelles le numéro de séquence contenu dans le dernier paquet de crédits reçu est inférieur ou égal au numéro de séquence du dernier paquet de données envoyé et pour lesquelles la différence entre ces deux numéros de séquence est la plus petite, l'émetteur conservant les paquets de données ainsi émis.

Au niveau du récepteur, la perte d'un paquet peut être décelée par détection du remplissage d'un tampon et identification du numéro d'ordre du ou des paquets reçus, mais non stockés du fait d'un débordement des tampons.

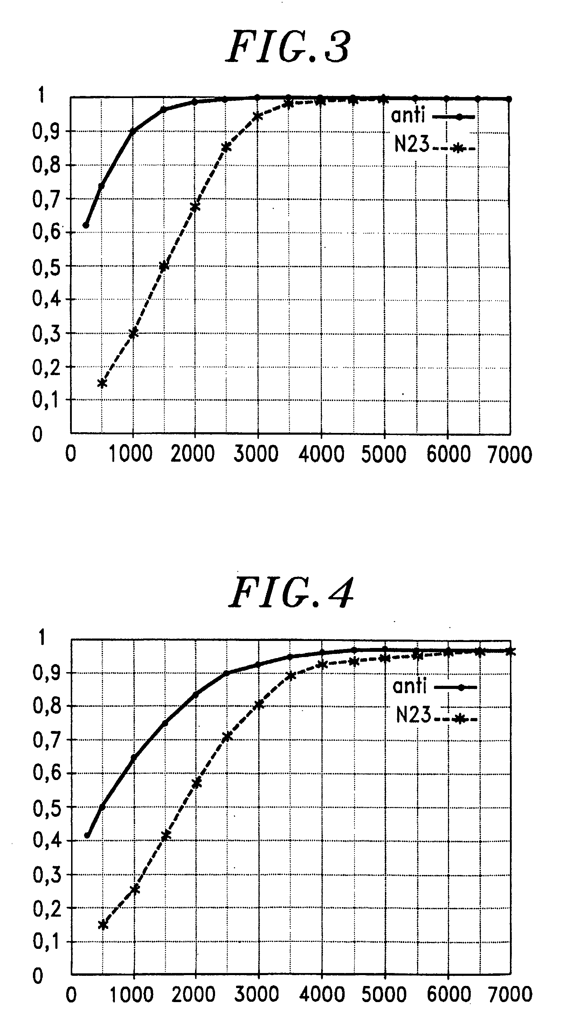

Des résultats très satisfaisants ont été obtenus au cours de simulations. A titre d'exemple, les figures 3 et 4 représentent une comparaison des débits relatifs de sortie obtenus respectivement avec le procédé et le dispositif conformes à la présente invention (courbes en traits continus), et avec la méthode, dite "N23", proposée par H.T. Kung et décrite dans l'article cité en introduction (courbes en tirets).

On définit le débit relatif de sortie comme le rapport entre le nombre total de paquets délivrés par le récepteur et le nombre total de paquets engendrés par les sources.

Les courbes des figures 3 et 4 représentent le débit relatif de sortie en fonction de la taille totale du tampon du récepteur, exprimée en nombre de paquets. Chaque point d'une courbe de mesure correspond à l'écoulement de 3.10⁶ paquets. Ces courbes correspondent à deux valeurs différentes de la "phase de blocage".

On sait que la sortie de chaque canal virtuel présente des phases de disponibilité et des phases de blocage. La durée d'une phase de blocage est exprimée en nombre de "temps paquet" pendant lequel le récepteur ne peut vider son tampon, un "temps paquet" étant la durée d'émission d'un paquet. Dans les figures 3 et 4, la proportion de la phase de blocage est de 50 % et le temps de propagation Rtt vaut 2400 temps paquet. Pour les courbes de la figure 3, la durée moyenne d'une phase de blocage est de 200. Pour les courbes de la figure 4, cette durée moyenne est de 720.

Dans les deux cas, on constate que la présente invention permet une meilleure utilisation des ressources. Pour une faible durée de phase de blocage, le gain du présent procédé est très important pour une faible taille du tampon (figure 3) ; pour une durée de phase de blocage importante, le gain du présent procédé, relativement moins important pour une faible taille du tampon, est sensible, même pour un tampon relativement grand (figure 4).

D'autres résultats de simulation ont également montré que les performances du présent procédé sont d'autant meilleures que le nombre de canaux virtuels est plus grand.

## Revendications

1. Procédé d'allocation de ressources dans un réseau numérique de transmission de données par paquets, entre un noeud émetteur de données (10) et un noeud adjacent récepteur de données (14) qui réémet vers l'aval, suivant lequel :
(a) le noeud récepteur (14) envoie au noeud émetteur (10) des paquets de crédits contenant des informations sur la capacité du noeud récepteur (14) à recevoir des paquets de données en provenance dudit noeud émetteur (10) ;
(b) l'émetteur (10) envoie les paquets de données qu'il a à transmettre tant qu'il dispose de suffisamment de crédits ;
**caractérisé en ce que** :
(c) lorsque ses crédits sont épuisés, le noeud émetteur (10) continue à envoyer par anticipation les paquets de données en attente qu'il a à transmettre et conserve chaque paquet de données émis par anticipation jusqu'à ce que sa réception soit confirmée par l'arrivée de paquets spécifiques en provenance du récepteur ;
(d) le récepteur (14) envoie vers l'émetteur (10) une information indiquant les paquets de données perdus ;
(e) l'émetteur (10) retransmet les paquets de données dont le récepteur (14) a signalé la perte et détruit les paquets de données émis par anticipation et précédant les paquets de données perdus.

2. Procédé selon la revendication 1, **caractérisé en ce que** les paquets de données émis portent un numéro de séquence et les paquets de crédits contiennent le numéro de séquence du paquet de données le plus élevé que le récepteur (14) est prêt à recevoir.

3. Procédé selon la revendication 2, dans lequel l'émetteur (10) possède plusieurs files d'attente respectivement associées à plusieurs canaux de propagation du réseau et dans lequel les paquets de données sont émis dans l'ordre de leur numéro de séquence, **caractérisé en ce que**
l'émetteur (10) transmet d'abord des paquets de données provenant de celles des files pour lesquelles le numéro de séquence contenu dans le dernier paquet de crédits reçu en provenance du récepteur (14) est strictement supérieur au numéro du dernier paquet de données envoyé, et
l'émetteur (10) transmet ensuite, par anticipation, des paquets de données provenant de celles des files pour lesquelles l'émission par anticipation est autorisée, pour lesquelles le numéro de séquence contenu dans le dernier paquet de crédits reçu en provenance du récepteur (14) est inférieur ou égal au numéro du dernier paquet de données envoyé et pour lesquelles la différence entre les deux numéros de séquence est la plus petite, l'émetteur (10) conservant les paquets de données transmis par anticipation.

4. Procédé selon la revendication 2 ou 3, dans lequel le récepteur (14) possède plusieurs files d'attente associées à plusieurs canaux de propagation du réseau, **caractérisé en ce que** lors de l'arrivée d'un paquet de données de numéro de séquence m qui ne peut être admis chez le récepteur, faute de place dans la file d'attente correspondante, alors que le paquet de données précédent pour cette file a été admis, le récepteur (14) envoie à l'émetteur (10) un paquet (DR) de détection de rejet comportant le numéro de séquence m et rejette systématiquement tous les paquets de données suivants, jusqu'à l'arrivée, par retransmission, d'un nouvel exemplaire du paquet de données de numéro de séquence m.

5. Procédé selon la revendication 2, 3 ou 4, **caractérisé en ce que** lorsque l'émetteur (10) reçoit un paquet de crédits, respectivement un paquet (DR) de détection de rejet, en provenance du récepteur (14), il détruit tous les paquets de données, nécessairement émis par anticipation, dont le numéro de séquence est inférieur ou égal, respectivement inférieur, au numéro de séquence indiqué dans le paquet de crédits, respectivement dans le paquet (DR) de détection de rejet.

6. Procédé selon l'une quelconque des revendications 2 à 5, **caractérisé en ce que** lorsque l'émetteur (10) reçoit un paquet (DR) de détection de rejet en provenance du récepteur (14), il inhibe l'émission par anticipation de paquets de données pour le canal de propagation concerné, jusqu'à l'arrivée d'un paquet de crédits comportant un numéro de séquence supérieur ou égal au numéro de séquence du premier paquet de données en attente à réémettre ou à transmettre prochainement sur ce canal de propagation.

7. Procédé selon l'une quelconque des revendications 1 à 6, **caractérisé en ce que** le récepteur (14) envoie un paquet de crédits vers l'émetteur (10) dès que l'un ou l'autre des événements suivants se produit : (i) le nombre de paquets de données partis vers l'aval depuis l'émission du dernier paquet de crédits vers l'émetteur est égal à un nombre prédéterminé ; (ii) une durée prédéterminée de non-émission de paquets de crédits s'est écoulée depuis l'émission du dernier paquet de crédits vers l'émetteur (10).

8. Dispositif d'allocation de ressources dans un réseau numérique de transmission de données par paquets, comprenant :
un noeud récepteur de données (14) comportant
- un nombre prédéterminé n de tampons d'entrée (20), respectivement associés à n canaux virtuels (VC1, VC2, ..., VCn) qui correspondent à plusieurs sources d'émission de données dans le réseau,
- des moyens (22), connectés à chacun des tampons (20), pour surveiller le niveau de remplissage des tampons (20), et
- des moyens d'émission (23), connectés auxdits moyens (22) de surveillance, pour constituer des paquets de crédits et des paquets de détection de rejet contenant des informations sur la capacité du noeud récepteur (14) à recevoir des paquets de données ;
un noeud émetteur de données (10) comportant
- n tampons d'entrée (16) respectivement associés aux n canaux virtuels (VC1, VC2, ..., VCn),
- des moyens de mémoire (24) pour stocker les valeurs des crédits qui sont remises à jour lors de la réception d'un paquet de crédits en provenance du récepteur (14) et lors de l'émission d'un paquet de données vers le récepteur (14),
- des moyens de gestion (28), connectés aux moyens de mémoire (24), comportant des moyens de multiplexage de sortie (18) et une pluralité de registres (38) respectivement associés aux n canaux virtuels, chaque registre (38) contenant le numéro de séquence du prochain paquet de données à transmettre sur le canal virtuel respectif, les moyens de gestion (28) étant programmés pour commander la transmission, éventuellement par anticipation, des paquets de données vers le récepteur en fonction des valeurs de crédits, pour commander, lorsqu'un paquet (DR) de détection de rejet est reçu en provenance du noeud récepteur (14), la suppression, dans le tampon d'entrée (16) du canal virtuel concerné, des paquets de données dont le numéro de séquence est inférieur au numéro indiqué dans ledit paquet (DR) de détection de rejet et l'interdiction de la transmission par anticipation sur ce canal virtuel, et pour commander, lorsqu'un paquet de crédits est reçu, la suppression, dans le tampon (16) du canal virtuel concerné, des paquets de données, nécessairement émis par anticipation, dont le numéro de séquence est inférieur ou égal au numéro indiqué dans ledit paquet de crédits et la réactivation éventuelle de l'émission par anticipation si celle-ci était interdite ; et
un lien (12) de transmission reliant le noeud émetteur (10) au noeud récepteur (14), sur lequel sont émis, d'une part, des paquets de données du noeud émetteur (10) vers le noeud récepteur (14), et d'autre part, des paquets de crédits et des paquets (DR) de détection de rejet du noeud récepteur (14) vers le noeud émetteur (10).

## Claims

1. A method for allocating resources in a packet data transmission digital network, between a data sender node (10) and an adjacent data receiver node (14) which resends in the downstream direction, in which:
(a) the receiver node (14) dispatches to the sender node (10) packets of credits containing information about the capacity of the receiver node (14) to receive data packets originating from said sender node (10);
(b) the sender node (10) dispatches the data packets which are to be transmitted so long as it has sufficient credits;
**characterized in that** the method further includes:
(c) continuing to dispatch in advance at said sender node (10) the waiting data packets which are to be transmitted when said credits are exhausted and preserving each data packet sent in advance until reception thereof is confirmed by the arrival of specific packets originating from said receiver node;
(d) dispatching from said receiver node (14) to said sender node (10) information indicating the lost data packets;
(e) retransmitting from said sender node (10) the data packets whose loss has been signalled by said receiver node (14) and destroying the data packets which were sent in advance and preceding the lost data packets.

2. The method according to claim 1, **characterized in that** the data packets sent bear a sequence number and the packets of credits contain the highest one of said sequence numbers of said data packets which the receiver (14) is ready to receive.

3. The method according to claim 2, in which the sender node (10) possesses several queues respectively associated with several network propagation channels and in which the data packets are sent in the order of their sequence number, **characterized in that**
the sender node (10) first transmits data packets originating from those of the queues for which the sequence number contained in the last packet of credits received originating from the receiver (14) is strictly greater than the number of the last data packet dispatched, and
the sender node (10) then transmits, in advance, data packets originating from those of the queues for which sending in advance is authorized, for which the sequence number contained in the last packet of credits received originating from the receiver node (14) is less than or equal to the number of the last data packet dispatched and for which the difference between the two sequence numbers is smallest, the sender node (10) preserving the data packets transmitted in advance.

4. The method according to claim 2 or 3, in which the receiver node (14) possesses several queues associated with several network propagation channels, **characterized in that**, upon the arrival of a data packet with sequence number m which cannot be admitted at the receiver, through lack of space in the corresponding queue, while the preceding data packet in respect of this queue has been admitted, the receiver node (14) dispatches to the sender node (10) a rejection detection packet (DR) which includes the sequence number m and systematically rejects all the succeeding data packets, until the arrival, by retransmission, of a fresh data packet whose sequence number is m.

5. The method according to claims 2, 3 or 4, further including, when said sender node (10) receives a packet of credits, respectively a rejection detection packet (DR), originating from said receiver node (14), destroying at said sender node all the data packets, necessarily sent in advance and whose sequence number is less than or equal to, respectively less than, the sequence number indicated in the packet of credits.

6. The method according to any of claims 2 to 5 further including, when said sender node (10) receives a rejection detection packet (DR) originating from said receiver node (14), disabling at said sender node the sending in advance of data packets in respect of the relevant propagation channel, until the arrival of a packet of credits which includes a sequence number greater than or equal to the sequence number of the first data packet still waiting to be resent or transmitted next over this propagation channel.

7. The method according to any of claims 1 to 6, **characterized in that** the receiver node (14) dispatches a packet of credits to the sender node (10) as soon as one or the other of the following events occurs: (i) the number of data packets which have departed heading downstream since the sending of the last packet of credits to the sender node is equal to a predetermined number; (ii) a predetermined duration of non-sending of packets of credits has elapsed since the sending of the last packet of credits to the sender node (10).

8. A device for allocating resources in a packet data transmission digital network, comprising:
a data receiver node (14) which includes
• a predetermined number n of input buffers (20), respectively associated with n virtual channels (VC1, VC2, ..., VCn) which correspond to several sources for sending data in the network,
• means (22) for monitoring the fill level of said input buffers (20), said means being connected to each of the buffers (20), and
• sending means (23) connected to said monitoring means (22), said sending means being adapted for constructing packets of credits and rejection detection packets containing information about the capacity of the receiver node (14) to receive data packets;
a data sender node (10) which includes
• n input buffers (16) respectively associated with said n virtual channels (VC1, VC2, ..., VCn),
• memory means (24) for storing the values of said credits, said values being updated upon receipt of a packet of credits originating from the receiver node (14) and upon the sending of a data packet to the receiver node (14),
• management means (28), connected to said memory means (24), said management means further including output multiplexing means (18) and a plurality of registers respectively associated with said n virtual channels, each register (38) of said plurality of registers containing a sequence number of the next data packet to be transmitted over the respective virtual channel, said management means (28) being programmed and thus adapted so as to control the transmission to said receiver node as a function of said values of credits with said packet data transmission occurring possibly in advance, to control, when a rejection detection packet (DR) is received originating from said receiver node (14), the deletion from the input buffer (16) of the relevant virtual channel of those data packets whose sequence number is less than the number indicated in said rejection detection packet and the prohibiting over said relevant virtual channel of the transmission in advance, and to control when a packet of credits is received the deletion from the buffer of the relevant virtual channel of those data packets, necessarily sent in advance, whose sequence number is less than or equal to the number indicated in said packet of credits and the possible reactivation of the sending in advance if the latter was prohibited; and
a transmission link (12) joining said sender node (10) to said receiver node (14) and over which are sent, on the one hand, data packets from said sender node (10) to said receiver node (14), and, on the other hand, packets of credits and rejection detection packets (DR) from said receiver node (14) to the sender node (10).

## Patentansprüche

1. Verfahren für die Zuweisung von Betriebsmitteln in einem digitalen Paketdatenübertragungsnetzwerk zwischen einem Datensenderknoten (10) und einem benachbarten Datenempfängerknoten (14), der stromabwärts weitersendet, bei welchem:
(a) der Empfängerknoten (14) an den Senderknoten (10) Guthabenpakete sendet, die Informationen über die Kapazität des Empfängerknotens (14), von dem Senderknoten (10) kommende Datenpakete zu empfangen, enthält;
(b) der Sender (10) die Datenpakete, die er zu übertragen hat, schickt, so lange er ausreichend Guthaben besitzt;
**dadurch gekennzeichnet, dass**:
(c) wenn sein Guthaben erschöpft ist, der Senderknoten (10) die wartenden Datenpakete, die er zu übertragen hat, im Vorhinein weiter sendet und jedes im Vorhinein gesendete Datenpaket behält, bis dessen Empfang durch das Eintreffen spezifischer vom Empfänger kommender Pakete bestätigt wird;
(d) der Empfänger (14) an den Sender (10) eine Information schickt, welche die verlorenen Datenpakete angibt;
(e) der Sender (10) die Datenpakete, deren Verlust der Empfänger (14) angezeigt hat, erneut sendet und die im Vorhinein gesendeten Datenpakete, die den verlorenen Datenpaketen vorangehen, zerstört.

2. Verfahren nach Anspruch 1, **dadurch gekennzeichnet, dass** die gesendeten Datenpakete eine Reihenfolgenummer tragen, und dass die Guthabenpakete die Reihenfolgenummer des höchsten Datenpakets enthalten, welches der Empfänger (14) zu empfangen bereit ist.

3. Verfahren nach Anspruch 2, bei welchem der Sender (10) mehrere jeweils mehreren Ausbreitungskanälen des Netzwerks zugeordnete Warteschlangen besitzt, und bei welchem die Datenpakete in der Reihenfolge ihrer Reihenfolgenummer gesendet werden, **dadurch gekennzeichnet, dass**
der Sender (10) zunächst Datenpakete sendet, die von denjenigen der Warteschlangen kommen, für die die im letzten empfangenen, vom Empfänger (14) kommenden Guthabenpaket enthaltene Reihenfolgenummer streng größer als die Nummer des letzten gesendeten Datenpakets ist, und
der Sender (10) anschließend im Vorhinein Datenpakete sendet, die von denjenigen der Warteschlangen kommen, für die das Senden im Vorhinein zugelassen ist, für die die in dem letzten empfangenen, vom Empfänger (14) kommenden Guthabenpaket enthaltene Reihenfolgenummer kleiner oder gleich der Nummer des letzten gesendeten Datenpakets ist, und für die die Differenz zwischen den zwei Reihenfolgenummern am kleinsten ist, wobei der Sender (10) die im Vorhinein übertragenen Datenpakete behält.

4. Verfahren nach Anspruch 2 oder 3, bei welchem der Empfänger (14) mehrere Warteschlangen besitzt, die mehreren Ausbreitungskanälen des Netzwerks zugeordnet sind, **dadurch gekennzeichnet, dass** beim Eintreffen eines Datenpakets mit Reihenfolgenummer m, das vom Empfänger mangels Platz in der entsprechenden Warteschlange nicht angenommen werden kann, wohingegen das vorhergehende Datenpaket für diese Warteschlange angenommen worden ist, der Empfänger (14) an den Sender (10) ein Zurückweisungserfassungspaket (DR) sendet, welches die Reihenfolgenummer m enthält, und systematisch alle folgenden Datenpakete zurückweist, bis durch Neuübertragung ein neues Exemplar des Datenpakets mit Reihenfolgenummer m eintrifft.

5. Verfahren nach Anspruch 2, 3 oder 4, **dadurch gekennzeichnet, dass**, wenn der Sender (10) ein Guthabenpaket bzw. ein Zurückweisungserfassungspaket (DR) vom Empfänger (14) kommend empfängt, er alle notwendigerweise im Vorhinein gesendeten Datenpakete zerstört, deren Reihenfolgenummer kleiner oder gleich bzw. kleiner als die in dem Guthabenpaket bzw. in dem Zurückweisungserfassungspaket (DR) angegebene Reihenfolgenummer ist.

6. Verfahren nach einem beliebigen der Ansprüche 2 bis 5, **dadurch gekennzeichnet, dass** wenn der Sender (10) ein vom Empfänger (14) kommendes Zurückweisungserfassungspaket (DR) empfängt, er das Senden im Vorhinein von Datenpaketen für den betreffenden Ausbreitungskanal sperrt, bis ein Guthabenpaket eintrifft, das eine Reihenfolgenummer aufweist, die größer oder gleich der Reihenfolgenummer des ersten Datenpaketes ist, das auf ein erneutes Senden auf dem Ausbreitungskanal wartet oder demnächst auf dem Ausbreitungskanal zu übertragen ist.

7. Verfahren nach einem beliebigen der Ansprüche 2 bis 6, **dadurch gekennzeichnet, dass** der Empfänger (14) ein Guthabenpaket an den Sender (10) schickt, sobald das eine oder andere der folgenden Ereignisse auftritt: (i) die Zahl von seit dem Senden des letzten Guthabenpaketes an den Sender nach stromabwärts abgegangenen Datenpakete ist gleich einer vorgegebenen Zahl; (ii) eine vorgegebene Zeitdauer des Nichtsendens von Guthabenpaketen ist seit dem Senden des letzten Guthabenpakets an den Sender (10) verstrichen.

8. Vorrichtung zur Zuweisung von Betriebsmitteln in einem digitalen Paketdatenübertragungsnetz, mit:
einem Empfängerknoten (14), welcher umfasst:
- eine vorgegebene Zahl n von Eingangspuffern (20), die jeweils n virtuellen Kanälen (VC1, VC2, ..., VCn) zugeordnet sind, die mehreren Sendequellen von Daten im Netz entsprechen,
- Mittel (22), die mit jedem der Puffer (20) verbunden sind, um den Füllstand der Puffer (20) zu überwachen, und
- Sendemittel (23), die mit den Überwachungsmitteln (22) verbunden sind, um Guthabenpakete und Zurückweisungserfassungspakete zu bilden, die Informationen über die Kapazität des Empfängerknotens (14) zum Empfangen von Datenpaketen enthalten;
einem Daten-Senderknoten (10), welcher umfasst:
- n Eingangspuffer (16), die jeweils den n virtuellen Kanälen (VC1, VC2, ..., VCn) zugeordnet sind,
- Speichermittel (24) zum Speichern der Werte der Guthaben, die beim Empfang eines vom Empfänger (14) kommenden Guthabenpakets und beim Senden eines Datenpaketes an den Empfänger (14) aktualisiert werden,
- Verwaltungsmittel (28), die mit den Speichermitteln (24) verbunden sind und Ausgangsmultiplexmittel (18) und eine Mehrzahl von jeweils den n virtuellen Kanälen zugeordneten Registern (38) umfassen, wobei jedes Register (38) die Reihenfolgenummer des nächsten auf dem jeweiligen virtuellen Kanal zu übertragenden Datenpaketes enthält, die Verwaltungsmittel (28) programmiert sind, um die Übertragung, gegebenenfalls im Vorhinein, von Datenpaketen zum Empfänger in Abhängigkeit von den Guthabenwerten zu steuern, um, wenn ein vom Empfängerknoten (14) kommendes Zurückweisungserfassungspaket (DR) empfangen wird, die Beseitigung der Datenpakete, deren Reihenfolgenummer kleiner als die in dem Zurückweisungserfassungspaket angegebene Reihenfolgenummer ist, in dem Eingangspuffer (16) des betreffenden virtuellen Kanals und die Sperrung der Übertragung im Vorhinein auf diesem virtuellen Kanal zu steuern, und, wenn ein Guthabenpaket empfangen wird, die Beseitigung, in dem Puffer (16) des betreffenden virtuellen Kanals, von notwendigerweise im Vorhinein gesendeten Datenpaketen, deren Reihenfolgenummer kleiner oder gleich der in dem Guthabenpaket angegebenen Reihenfolgenummer ist, und die eventuelle Reaktivierung des Sendens im Vorhinein, wenn dieses gesperrt war, zu steuern; und
einer Übertragungsstrecke (12), welche den Senderknoten (10) mit dem Empfängerknoten (14) verbindet, auf welcher einerseits Datenpakete vom Senderknoten (10) an den Empfängerknoten (14) und andererseits Guthabenpakete und Zurückweisungserfassungspakete (DR) vom Empfängerknoten (14) zum Senderknoten (10) gesendet werden.
